# EUROPEAN PATENT APPLICATION

(11) **EP 4 474 409 A1**
(43) Date of publication of application: **11.12.2024**
(21) Application number: 23749788.8
(22) Date of filing: 01.02.2023
(51) Int. Cl.: C08J 5/00, C08J 5/06, C08K 7/02

(54) **RESIN MOLDED PRODUCT AND METHOD FOR PRODUCING SAME**

(30) Priority: 04.02.2022 JP 2022016179
(71) Applicant: National University Corporation Tokai National Higher Education and Research System, Nagoya-shi, Aichi 464-8601 (JP); U-MAP Co., Ltd., Nagoya-shi, Aichi 464-0822 (JP)
(72) Inventor: UJIHARA, Toru, Nagoya-shi, Aichi 464-8601 (JP); OKUNO, Kazuki, Nagoya-shi, Aichi 464-8601 (JP); OKADA, Shiho, Nagoya-shi, Aichi 464-8601 (JP); WATANABE, Shota, Nagoya-shi, Aichi 464-0822 (JP); MATSUMOTO, Masaki, Nagoya-shi, Aichi 464-0822 (JP)
(74) Representative: Lewis Silkin LLP
(86) International application number: PCT/JP2023/003211
(87) International publication number: WO 2023/149472

(57) **Abstract**

[PROBLEMS] To provide a resin molded body having AlN whiskers with excellent thermal conductivity, and a method for producing the same.

[SOLUTION MEANS] The resin molded body includes at least, AlN whiskers each having a fibrous AlN single-crystal body having a surface and an oxygen-containing layer covering the surface of the AlN single-crystal body, and a resin material, wherein a weight ratio of the AlN whiskers is in a range of 3.0 wt% or more and 65.0 wt% or less.

## Description

### TECHNICAL FIELD

The present disclosure relates to a resin molded body having AlN whiskers and a method for producing the resin molded body having the AlN whiskers.

### RELATED ART

As an electronic device becomes smaller and a performance thereof improves, a thermal management in the electronic device is becoming increasingly important. Due to concerns about reduced performances of the electronic device, it is necessary to dissipate heat to an outside of the electronic device as much as possible. In this regard, there is a demand to improve a thermal conductivity of resin parts used inside the electronic device.

Adding insulating fillers such as spherical ceramics is known as a method for improving the thermal conductivity of the resin parts. In order to improve the thermal conductivity, it is important to increase contact efficiency between the fillers to form a network structure (heat dissipation path). When spherical fillers are used, from the viewpoint of network formation, it is common for the spherical fillers having a weight ratio of 70 wt% to 90 wt% to be filled (added) to a resin material. However, a high filling amount (weight ratio) causes problems such as an increase in the weight of the resin material (resin parts) and a decrease in processability. Further, the filling amount of the fillers in the resin material is practically reaching its limit.

In view of this background, some of the inventors of the present application have conducted researches and developments of fibrous AlN whiskers having a high thermal conductivity and a high insulating property (Patent Documents 1 and 2).

### PRIOR ART DOCUMENT

### PATENT DOCUMENT

Patent document 1: JP-A-2014-73951
Patent document 2: JP-A-2018-154534

### SUMMARY OF THE INVENTION

### PROBLEM TO BE SOLVED BY THE INVENTION

However, it remains unclear from the viewpoint of a thermal conductivity, a processability and the like with a view to commercial use as follows: what extent the AlN whiskers disclosed in Patent Documents 1 and 2 should be filled into the resin material; and what kind of form the AlN whiskers should be added to the resin material in. The present disclosure therefore aims to provide, in various embodiments, a resin molded body having AlN whiskers with an excellent thermal conductivity and a method for producing the same.

### MEANS FOR SOLVING THE PROBLEM

As a result of intensive researches by the inventors to solve the above problems, they have discovered that even the resin molded body including the AlN whiskers having a small filling amount (small weight ratio) contributes to improve the thermal conductivity.

That is, a resin molded body in one aspect comprises at least, AlN whiskers each having a fibrous AlN single-crystal body having a surface and an oxygen-containing layer covering the surface of the AlN single-crystal body, and a resin material, wherein a weight ratio of the AlN whiskers is in a range of 3.0 wt% or more and 65.0 wt% or less.

In one aspect of the resin molded body, the weight ratio of the AlN whiskers is in the range of 3.0 wt% or more and 20.0 wt% or less, or 50.0 wt% or more and 65.0 wt% or less.

In one aspect of the resin molded body, the AlN whiskers are mainly composed of a diameter of 1.0 um or more.

In one aspect of the resin molded body, the AlN whiskers come into contact with each other to form a sheet-like formed body having a network structure, and the resin material is impregnated in the sheet-like formed body.

In one aspect of the resin molded body, the resin material is formed of a plurality of spherical resin particles each having a surface, and the surface of the plurality of the resin particles is covered with the AlN whiskers, thereby forming a cover formed body.

In one aspect of the resin molded body, the resin molded body has the number of contact points being the total number of points at which the AlN whiskers contact with each other per unit volume, and the number of contact points is in a range of 0.015/µm³ or more and 1/µm³ or less.

In one aspect of the resin molded body, the number of contact points is in the range of 0.016/µm³ or more and 1/µm³ or less.

In one aspect of the resin molded body, the number of contact points is in the range of 0.020/µm³ or more and 1/µm³ or less.

In one aspect of the resin molded body, the number of contact points is in the range of 0.023/µm³ or more and 1/µm³ or less.

In one aspect of the resin molded body, each of the AlN whiskers has a diameter in a range of 1.0 um or more and 10 um or less.

In one aspect of the resin molded body, each of the AlN whiskers has a diameter in the range of 5.0 um or more and 10 um or less.

A method for producing a resin molded body in one aspect is a method for producing a resin molded body including at least, AlN whiskers each having a fibrous AlN single-crystal body having a surface and an oxygen-containing layer covering the surface of the AlN single-crystal body, and a resin material, the method comprising: forming a sheet-like formed body having a network structure in which the AlN whiskers come into contact with each other; and impregnating the sheet-like formed body with the resin material.

A method for producing a resin molded body in one aspect is a method for producing a resin molded body including at least, AlN whiskers each having a fibrous AlN single-crystal body having a surface and an oxygen-containing layer covering the surface of the AlN single-crystal body, and a plurality of spherical resin particles each having a surface, the method comprising: forming a cover formed body in which the surface of the plurality of the resin particles is covered with the AlN whiskers; and pressing the cover formed body.

### EFFECTS OF THE INVENTION

The resin molded body of the present disclosure has the excellent thermal conductivity while containing AlN whiskers having the small weight ratio.

### BRIEF DESCRIPTION OF THE DRAWINGS

FIG. 1 is a schematic diagram showing a configuration of a resin molded body according to a first embodiment.
FIG. 2 is a schematic diagram showing the configuration of the resin molded body according to a first modified example.
FIG. 3 is a schematic diagram showing the configuration of the resin molded body according to a second modified example.
FIG. 4 is a schematic diagram showing the configuration of the resin molded body according to a third modified example.
FIG. 5 is a diagram showing results of thermal conductivity of the resin molded body according to examples and comparative examples.
FIG. 6 is a diagram showing results of the thermal conductivity of the resin molded body according to the examples and the comparative examples.
FIG. 7 is a table showing results of measurements performed on six samples of the resin molded body according to the above-mentioned first embodiment (FIG. 1) and seven samples of the resin molded body according to the above-mentioned third modified example (FIG. 4).
FIG. 8 is a graph showing a relationship between the number of contact points and the thermal conductivity for each of the resin molded body according to the first embodiment and the resin molded body according to the third modified example based on the measurement results shown in FIG. 7.
FIG. 9 is a graph showing the relationship between the number of contact points and the thermal conductivity for each of average diameters (ranges) of four types based on the measurement results shown in FIG. 7.

### MODE FOR CARRYING OUT THE INVENTION

Hereinafter, various embodiments of a resin molded body and a method for producing the same will be described with reference to the accompanying drawings. Note that the same reference numerals are used to designate components common to the drawings. Further, note that the accompanying drawings are not necessarily drawn to scale.

### 1. Resin molded body according to first embodiment

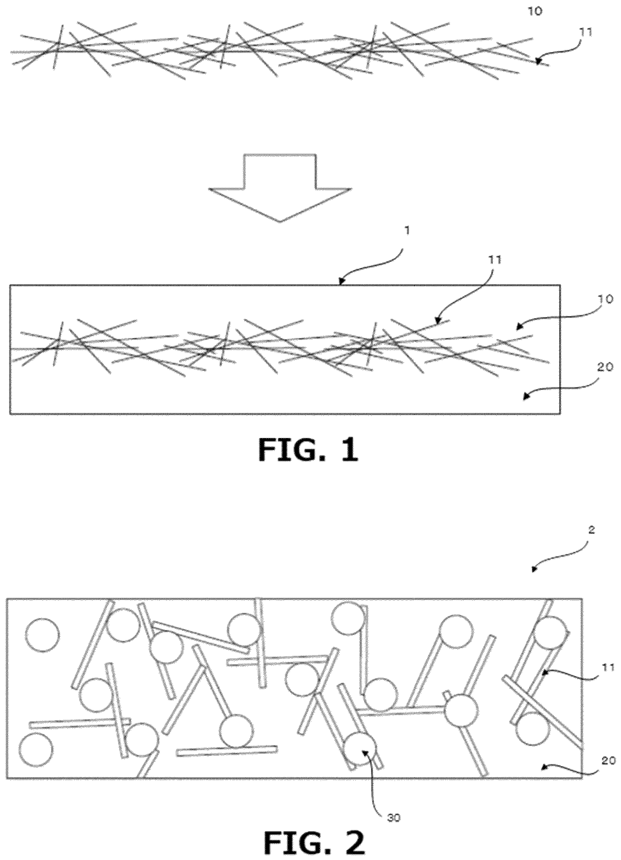

An overview of a resin molded body according to a first embodiment will be described with reference to FIG. 1. FIG. 1 is a schematic diagram showing a configuration of a resin molded body 1 according to the first embodiment. In this disclosure, the term "resin molded body" refers to a molded body formed mainly from AlN whiskers and a resin material.

The resin molded body 1 according to the first embodiment mainly includes a sheet-like formed body 10 having a network structure in which (a large number of) AlN whiskers 11 come into contact with each other and a resin material 20. The resin molded body 1 according to the first embodiment (and the resin molded body according to modified examples described below) may contain other additives such as a dispersing agent. The formed sheet-like formed body 10 having the network structure refers to a thin sheet-like object in which (the large number of) the AlN whiskers 11 are entangled and come into contact with each other, forming a large number of heat dissipation paths by the AlN whiskers 11. The resin molded body 1 according to the first embodiment is formed by impregnating this sheet-like formed body 10 with the resin material 20.

Each of the AlN whiskers 11 mainly includes a fibrous AlN single-crystal body having a surface and an oxygen-containing layer that cylindrically covers the surface of the AlN single-crystal body. In addition, each of the AlN whiskers 11 may include a hydrophobic layer that cylindrically covers the oxygen-containing layer on an outer side of the oxygen-containing layer.

A length of each of the AlN whiskers 11 may be in a range of 1.0 um to 5.0 cm but is not limited to this range. A diameter of each of the AlN whiskers 11 may be in a range of 0.1 um to 50.0 um, but from the viewpoint of the network formation (formation of the heat dissipation paths), the diameter of each of the AlN whiskers 11 used in the resin molded body 1 is preferably 1.0 um or more, and more preferably 2.0 um to 50.0 um. Since details of structure of the AlN whiskers 11 used in the resin molded body 1, details of the method for producing the AlN whiskers or the like are already publicly known (see, for example, Patent Documents 1 and 2 mentioned above), detailed description of these will be omitted in this disclosure.

Here, a method for producing the sheet-like formed body 10 and the resin molded body 1 according to the first embodiment will be described.

First, (the large number of) the AlN whiskers 11 produced by a known method are prepared, the AlN whiskers 11 are dispersed in a predetermined solvent, and then a paper-like intermediate product in which the AlN whiskers 11 are uniformly dispersed to a certain degree is produced. Then, the intermediate product is pressed with a press machine at a predetermined pressure for a predetermined time to produce the sheet-like formed body 10. The predetermined solvent may be water, an organic solvent or the like without any restrictions. When the organic solvent is used as the predetermined solvent, for example, a polar solvent such as ethanol or propanol may be used. The predetermined pressure may be, for example, 10 kg/cm² to 100 kg/cm². The predetermined time may be, for example, 5 minutes to 60 minutes. The purpose of pressing the intermediate product with the press machine is to remove the predetermined solvent contained in the intermediate product. Therefore, if a content of the predetermined solvent in the intermediate product is small, the step of pressing the intermediate product with the press machine may be omitted, and the intermediate product generated as described above may be used as the sheet-like formed body 10.

Next, the formed sheet-like formed body 10 is placed on a predetermined mold, the mold is impregnated with the liquid resin material 20, and the resin material 20 is then solidified (cured) to form the resin molded body 1 according to the first embodiment.

Examples of the resin material 20 include, for example, a thermosetting resin such as a silicone resin, an epoxy resin, a phenol resin, a melamine resin, a urea resin, a thermosetting polyimide, an unsaturated polyester resin or a polyurethane, and these resins can be used without any restrictions.

Further, examples of the resin material 20 also include, for example, a thermoplastic resin such as polyethylene, polypropylene, polystyrene, polyvinyl chloride, polyvinylidene chloride, polyvinyl acetate, acrylonitrile-styrene copolymer, acrylonitrile-butadiene-styrene copolymer, acrylonitrile-ethylene-propylene-diene-styrene copolymer or methacrylic resin, and these resins can be used without any restrictions.

Further, examples of the resin material 20 also include a fluororesin such as polytetrafluoroethylene, polychlorotrifluoroethylene, polyvinylidene fluoride or polyvinyl fluoride, and these resins can be used without any restrictions.

Further, examples of the resin material 20 also include polycarbonate, polyamide resin, polyacetal, polyethylene terephthalate, polybutylene terephthalate, polyether ether ketone, polyphenyl sulfide, polysulfone, polyetherimide, polyamideimide, thermoplastic polyimide, liquid crystal polymer or the like, and these resins can be used without any restrictions.

Further, examples of the resin material 20 also include acrylonitrile styrene acrylate, atactic polypropylene, cellulose acetate, cellulose acetate butyrate, chlorinated vinyl chloride, chloroprene rubber, diallyl phthalate, ethylene ethyl acrylate, ethylene propylene diene terpolymer, ethylene tetrafluoroethylene copolymer, ethylene vinyl acetate copolymer, ethyl vinyl ether, ethylene vinyl alcohol copolymer, perfluoro rubber, tetrafluoroethylene-hexafluoropropylene copolymer, soft urethane foam or the like, and these resins can be used without any restrictions.

Further, examples of the resin material 20 also include glass fiber reinforced plastics, glass fiber reinforced thermoplastics, butyl rubber, ionomer, isoprene rubber, melamine formaldehyde, methyl methacrylate, nitrile rubber, natural rubber, polyacrylic acid, polyaryl ether ketone, polyester alkyd resin, polyacrylonitrile, polyarylate or the like, and these resins can be used without any restrictions.

Further, examples of the resin material 20 also include polyparaphenylene benzobisoxazole, polybutadiene styrene, diallyl terephthalate, polydicyclopentadiene, polyethylene naphthalate, polyethylene oxide, polyethersulfone, phenol formaldehyde, tetrafluoroethylene perfluoroalkyl vinyl ether copolymer, polyisobutylene, polymethylpentene or the like, and these resins can be used without any restrictions.

Further, examples of the resin material 20 also include polyphthalamide, polyphenylene ether, polyphenylene oxide, polytrimethylene terephthalate, reactive polyurethane, polyvinyl alcohol, polyvinyl butyral, acrylic modified polyvinyl chloride, polyvinyl dichloride, vinyl chloride vinyl acetate copolymer or the like, and these resins can be used without any restrictions.

Furthermore, examples of the resin material 20 also include polyvinyl formal, polyvinylpyrrolidone, styrene butadiene, styrene butadiene rubber, styrene block copolymer, styrene butadiene styrene block copolymer, styrene ethylene butylene styrene block copolymer, styrene ethylene propylene styrene block copolymer, styrene isoprene styrene block copolymer, sheet molding compound, syndiotactic polystyrene, thermoplastic elastomer, thermoplastic polyurethane, urea formaldehyde resin, ultra-high molecular weight polyethylene, vinyl chloride ethylene, vinyl chloride octyl acrylate, crosslinked polyethylene or the like, and these resins can be used without any restrictions.

From the viewpoint of the thermal conductivity and processability of the resin molded body 1, a filling amount of the AlN whisker 11 (the AlN whiskers 11) in the resin molded body 1 according to the first embodiment is preferably in a range of 3.0 wt% to 65.0 wt% in weight ratio. In order to improve the thermal conductivity of the resin molded body 1, it is necessary to fill the resin molded body 1 with AlN whiskers 11 having a weight ratio of 3.0 wt% at a minimum. Further, if the weight ratio of the AlN whiskers 11 in the resin molded body 1 is 65.0 wt% or more, particularly 70.0 wt% or more, the processability of the resin molded body 1 decreases (it becomes difficult to mold the resin molded body 1). In addition, when the resin molded body 1 that places importance on the processability is required, the filling amount of the AlN whisker 11 (the AlN whiskers 11) in the resin molded body 1 is more preferably in the range of 3.0 wt% to 20.0 wt%, and most preferably in the range of 5.0 wt% to 20.0 wt%. On the other hand, when the resin molded body 1 that places importance on the thermal conductivity is required, the filling amount of the AlN whisker 11 (the AlN whiskers 11) in the resin molded body 1 is more preferably in the range of 40.0 wt% to 65.0 wt%, and most preferably in the range of 50.0 wt% to 65.0 wt%.

### 2. Resin molded body according to modified examples

### 2-1. First modified example

Next, an overview of the resin molded body according to a first modified example will be described with reference to Fig. 2. Fig. 2 is a schematic diagram showing a configuration of a resin molded body 2 according to the first modified example.

The resin molded body 2 according to the first modified example mainly contains the AlN whiskers 11, the resin material 20 described above and spherical AlN fillers 30. In other words, the resin molding 2 of the first modified example can be understood as a resin material having the AlN whiskers 11 further added to a conventional resin material that mainly contains the resin material 20 and the spherical AlN fillers 30.

Further, the resin molded body 2 according to the first modified example does not have the sheet-like formed body 10 included in the resin molded body 1 according to the first embodiment described above. In other words, the resin molded body 2 according to the first modified example is formed by preparing in advance (the large number of) the AlN whiskers 11 produced by a known method and the spherical AlN fillers 30 produced by a known method, placing these in a predetermined mold so as to be uniformly dispersed, impregnating the mold with the liquid resin material 20, and then solidifying (curing) the resin material 20.

The AlN whiskers 11 and the resin material 20 contained in the resin molded body 2 according to the first modified example can be similar to those used in the resin molded body 1 according to the first embodiment. Further, as the spherical AlN fillers 30 contained in the resin molded body 2 according to the first modified example, generally known AlN fillers can be used.

When a filling amount of the spherical AlN fillers 30 in the resin molded body 2 is, for example, about 60 wt% to 70 wt% in weight ratio, the filling amount of the AlN whisker 11 (the AlN whiskers 11) in the resin molded body 2 according to the first modified example is preferably in the range of 3.0 wt% to 20.0 wt%, more preferably in the range of 5.0 wt% to 20.0 wt%, and most preferably in the range of 5.0 wt% to 10.0 wt%. In the case where the resin molded body 2 already contains the spherical AlN fillers 30 having a weight ratio of about 60 wt% to 70 wt%, the resin molding 2 can improve its thermal conductivity by containing the AlN whiskers 11 having a weight ratio of 3.0 wt% or more. On the other hand, in the case where the resin molded body 2 already contains the spherical AlN fillers 30 having a weight ratio of about 60 wt% to 70 wt%, if the AlN whiskers 11 are contained in an amount exceeding 20.0 wt% in weight ratio, this is not preferable from the viewpoint of the processability and moldability of the resin molded body 2.

### 2-2. Second modified example

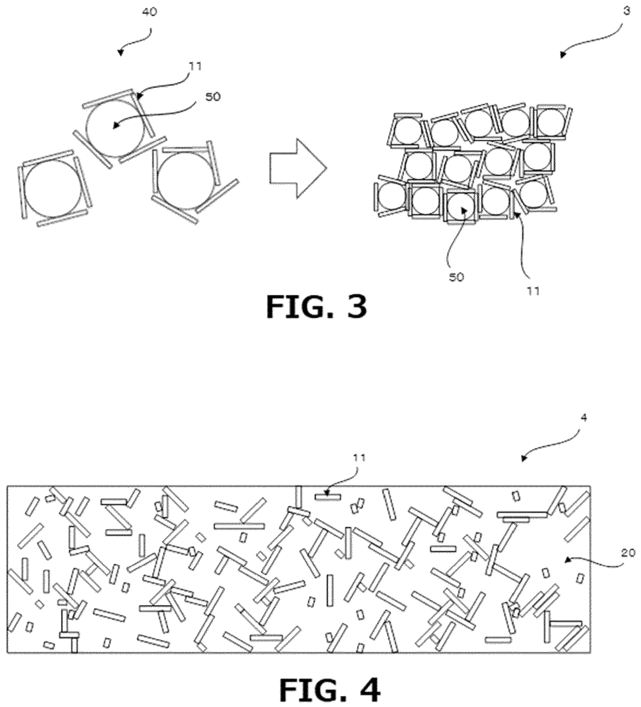

Next, an overview of the resin molded body according to a second modified example will be described with reference to Fig. 3. Fig. 3 is a schematic diagram showing a configuration of a resin molded body 3 according to the second modified example.

The resin molded body 3 according to the second modified example mainly contains (the large number of) the AlN whiskers 11 and spherical resin materials 50 (spherical resin particles each having a surface). In addition, in the resin molded body 3 according to the second modified example, as shown in FIG. 3, a cover formed body 40 in which the surface of the plurality of resin particles 50 is covered with the AlN whiskers 11 is formed. In other words, the resin molded body 3 of the second modified example includes the cover formed body 40 as a substitute for the sheet-like formed body 10 in the resin molded body 1 of the first embodiment.

The resin molded body 3 of the second modified example is formed by preparing in advance (the large number of) the AlN whiskers 11 produced by a known method and the plurality of the spherical resin particles 50, forming the cover formed body 40 in which the surface of the plurality of the resin particles 50 are covered with the AlN whiskers 11, placing this cover formed body 40 on a predetermined mold, pressing the cover formed body 40 with a predetermined pressure, and subjecting it to a heat treatment at a predetermined temperature.

The AlN whiskers 11 contained in the resin molded body 3 according to the second modified example can be similar to those used in the resin molded body 1 according to the first embodiment. Further, the resin materials (resin particles) 50 contained in the resin molded body 3 according to the second modified example can be similar to the resin material 20 that can be used in the resin molded body 1 according to the first embodiment, and any material that is spherical can be used without restriction.

As the second resin materials (resin particles) 50 in the resin molded body 3 according to the second modified example, resin particles having a diameter of 1.0 um to 200.0 um can be used as an example. Further, it is more preferable to use resin particles having the diameter of 5.0 um to 100.0 um, and it is most preferable to use resin particles having the diameter of 10.0 um to 50.0 µm.

From the viewpoint of the thermal conductivity and processability of the resin molded body 3, it is preferable that the filling amount of the AlN whisker 11 (the AlN whiskers 11) in the resin molded body 3 of the second modified example is in the range of 3.0 wt% to 65.0 wt% in weight ratio, as in the above-mentioned first embodiment.

### 2-3. Third modified example

Next, an overview of the resin molded body according to a second modified example will be described with reference to Fig. 4. Fig. 4 is a schematic diagram showing a configuration of a resin molded body 4 according to the third modified example.

The resin molded body 4 according to the third modified example mainly contains (the large number of) the AlN whiskers 11 and the resin material 20 described above. The resin molded body 4 according to the third modified example is similar to the resin molded body 1 according to the first embodiment described above but does not use the sheet-like formed body 10 in the resin molded body 1, and instead uses (the large number of) the AlN whiskers 11 each crushed to shorten their length. The length of (the large number of) the AlN whiskers 11 in the resin molded body 4 according to the third modified example is generally in the range of 1.0 µm to 300.0 µm, but is not limited thereto, and may be shorter than the length of the AlN whiskers used in the resin molded body 1 according to the first embodiment.

The resin molded body 4 of the third modified example is formed by preparing in advance (the large number of) the AlN whiskers 11 produced by a known method, crushing these to a predetermined length, dispersing the crushed (large number of) AlN whiskers 11 in the liquid resin material 20, placing the liquid resin material 20 in which (the large number of) the AlN whiskers 11 are dispersed in a predetermined mold, and solidifying (curing) the resin material 20.

The plurality of the AlN whiskers 11 and the resin material 20 contained in the resin molded body 4 according to the third modified example can be similar to those used in the resin molded body 1 according to the first embodiment.

From the viewpoint of the thermal conductivity and processability of the resin molded body 4, the filling amount of the AlN whisker 11 (the AlN whiskers 11) in the resin molded body 4 according to the third embodiment is preferably in the range of 3.0 wt% to 65.0 wt% in weight ratio, and more preferably in the range of 20.0 wt% to 40.0 wt%.

### EXAMPLES

### 1. Examples 1 to 3

A large number of AlN whiskers produced by a known method were dispersed in water to obtain a mixture, and then the mixture was filtered for 10 minutes to obtain a paper-like intermediate product in which the AlN whiskers were uniformly dispersed to a certain degree. Then, the intermediate product was pressed in a press machine at a pressure of 40 kg/cm² for 30 minutes to form a sheet-like formed body.

Next, the formed sheet-like formed body was placed on a predetermined mold, a liquid epoxy resin was added to the mold, and the mold was heated at 80°C for 3 hours and then at 150°C for 1 hour in a curing process to cure the epoxy resin and obtain a resin molded body. The liquid epoxy resin was added so that the weight ratio (wt%) of the AlN whiskers contained in the sheet-like formed body to the resin molded body was a ratio shown in Table 1 below. A diameter of the AlN whiskers used in Example 1 was larger than the diameter of the AlN whiskers used in Examples 2 and 3. The resin molded bodies of Examples 1 to 3 correspond to the resin molded body 1 according to the above-mentioned first embodiment.

**[Table 1]**

| | Example 1 | Example 2 | Example 3 |
|---|---|---|---|
| AlN whiskers | 50.0 wt% | 12.8 wt% | 5.7 wt% |

### 2. Examples 4 and 5

A plurality of spherical AlN fillers produced by a known method were added and dispersed in a liquid epoxy resin, and then a large number of the AlN whiskers produced by a known method were added and dispersed in the epoxy resin to prepare a slurry. The slurry was uniformly placed in a predetermined mold, and the mold was heated at 80°C for 3 hours and then at 150°C for 1 hour in a curing process to cure the epoxy resin, thereby obtaining a resin molded body. The liquid epoxy resin was added so that the weight ratio (wt%) of the AlN whiskers contained in the resin molded body to the resin molded body was a ratio shown in Table 2 below. In addition, values in parentheses in Table 2 below indicate the weight ratio of the total weight of the AlN whiskers and spherical AlN fillers to the resin molded body. The resin molded bodies of Examples 4 and 5 correspond to the resin molded body 2 of the first modified example described above.

**[Table 2]**

| | Example 4 | Example 5 |
|---|---|---|
| AlN whiskers | 5.0 wt% (60.0 wt%) | 5.0 wt% (70.0 wt%) |

### 3. Examples 6 and 7

A large number of the AlN whiskers produced by a known method and a large number of spherical (powdered) phenolic resins (phenolic resin particles) were prepared. Then, a cover formed body was formed such that a surface of the plurality of the phenolic resin particles was covered with the AlN whiskers.

Next, the cover formed body was placed in a specified mold and heated at 180°C for 5 minutes while applying pressure to harden the phenolic resin, thereby obtaining a resin molded body. The cover formed body was formed so that the weight ratio (wt%) of the AlN whiskers contained in the resin molded body to the resin molded body was a ratio shown in Table 3 below. The resin molded bodies of Examples 6 and 7 correspond to the resin molded body 3 of the second modified example described above.

**[Table 3]**

| | Example 6 | Example 7 |
|---|---|---|
| AlN whiskers | 11.7 wt% | 21.8 wt% |

### 4. Examples 8 to 11

A large number of the AlN whiskers produced by a known method were crushed to a predetermined length. The length of the AlN whiskers was 1.0 um to 300.0 um. Next, the crushed large number of AlN whiskers were dispersed in a liquid epoxy resin. The liquid epoxy resin in which the large number of the AlN whiskers were dispersed was placed in a predetermined mold, and the mold was heated at 80°C for 3 hours and then at 150°C for 1 hour in a curing process to cure the epoxy resin, thereby obtaining a resin molded body. The AlN whiskers were dispersed in the liquid epoxy resin so that the weight ratio (wt%) of the AlN whiskers contained in the resin molded body to the resin molded body was a ratio shown in Table 4 below. The diameter of the AlN whiskers used in Example 11 was larger than the diameter of the AlN whiskers used in Examples 8 to 10. The resin molded bodies in Examples 8 to 11 correspond to the resin molded body 4 in the third modified example described above.

**[Table 4]**

| | Example 8 | Example 9 | Example 10 | Example 11 |
|---|---|---|---|---|
| AlN whiskers | 40.0 wt% | 30.0 wt% | 20.0 wt% | 30.0 wt% |

### 5. Comparative Examples 1 and 2

For Comparative Example 1 and Comparative Example 2, a commercially available resin molded body to which only spherical AlN fillers were added was used. A resin material used in this commercially available product was silicone resin. The filling amount of the spherical AlN fillers (weight ratio (wt%) to the resin molded body) contained in each of the resin molded bodies according to Comparative Example 1 and Comparative Example 2 is as shown in Table 5 below.

**[Table 5]**

| | Comparative Example 1 | Comparative Example 2 |
|---|---|---|
| Spherical AlN fillers | 65.0 wt% | 95.0 wt% |

### 6. Evaluation

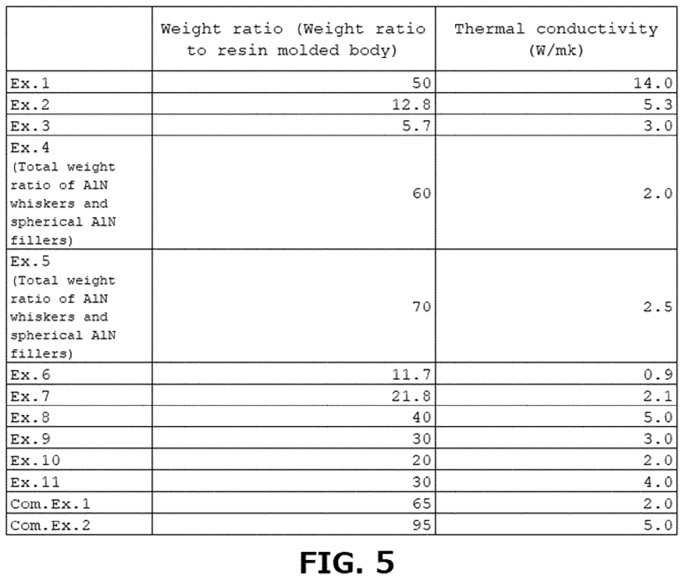

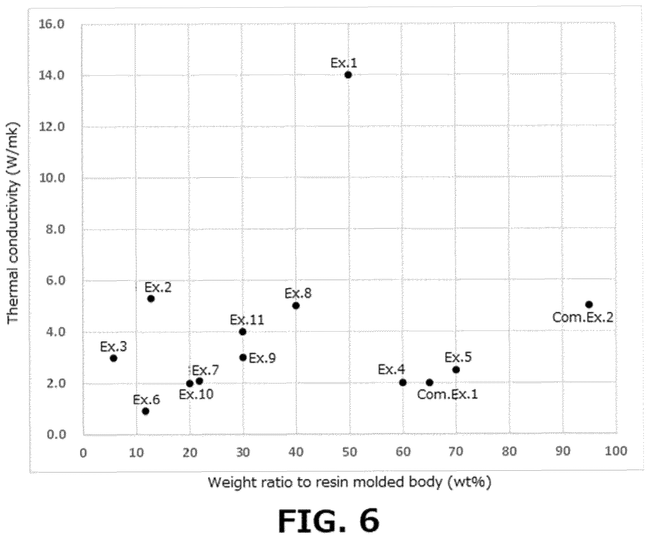

The thermal conductivity was measured for each of the resin molded bodies according to Examples 1 to 11 and Comparative Examples 1 and 2 obtained as described above. The thermal conductivity of Examples 1 to 11 and Comparative Examples 1 and 2 was calculated from the product of thermal diffusivity, specific heat and density. The thermal diffusivity of Examples 1 to 11 and Comparative Examples 1 and 2 was measured using a LaserPIT device manufactured by Advance Riko, the specific heat thereof was measured using a DSC-60A manufactured by Shimadzu Corporation, and the density thereof was measured using an AD-1653 manufactured by A&D. Figures 5 and 6 are diagrams showing the results of the thermal conductivity of the resin molded bodies according to Examples 1 to 11 and Comparative Examples 1 and 2.

As shown in Figures 5 and 6, the resin molded bodies according to Examples 1 to 11 had excellent thermal conductivity while containing a small weight ratio of the AlN whiskers. Further, when Example 5 was compared with Comparative Example 1 (Example 5 can be understood as Comparative Example 1 to which 5.0 wt% AlN whiskers have been additionally added), the thermal conductivity of Example 5 was higher than that of Comparative Example 1. Furthermore, the thermal conductivity of the resin molded bodies according to Examples 1 to 3 was higher than that of the other Examples.

From the above results, it is understood that a network structure (heat dissipation path) caused by the AlN whiskers is efficiently formed in the resin molded bodies of Examples 1 to 11. In particular, it is believed that such a network structure is more efficiently formed in the resin molded body including a sheet-like formed body.

### 7. Experimental Data

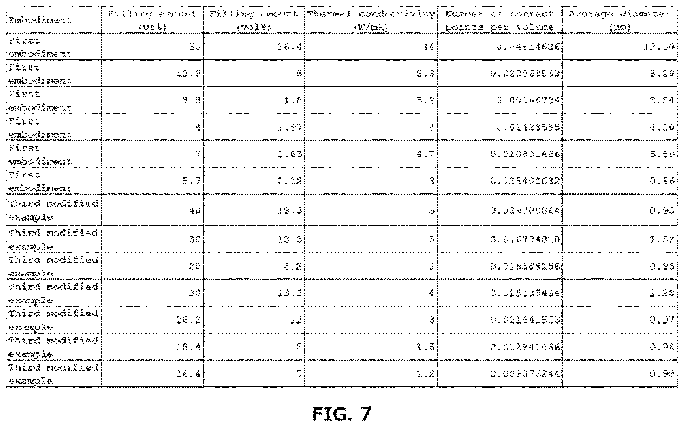

FIG. 7 is a table showing results of measurements performed on six samples of the resin molded body 1 according to the above-mentioned first embodiment (FIG. 1) and seven samples of the resin molded body 4 according to the above-mentioned third modified example (FIG. 4). In Figure 7, "filling amount (wt)" indicates the filling amount (unit: wt) of the AlN whiskers 11 filled in the resin molded body, "filling amount (vol%)" indicates the filling amount (unit: vol%) of the AlN whiskers 11 filled in the resin molded body, and "thermal conductivity" indicates the thermal conductivity of the resin molded body.

Further, "number of contact points per (unit) volume" (i.e., the "number of contact points") indicates the total number of points at which the AlN whiskers 11 filled in the resin molded body come into contact with each other per unit volume (µm³). Here, as an example, the number of contact points of the AlN whiskers 11 in a volume of 500 (µm) × 500 (µm) × 500 (µm) is measured, and the number of contact points measured in this way is divided by 500³ (µm³) to calculate the number of contact points per unit volume (i.e., the number of contact points). Note that here, as an example, the number of contact points is measured by taking an X-ray CT image of each sample and performing image analysis processing on the taken X-ray CT image using a computer.

Furthermore, the diameters of the AlN whiskers 11 filled in the resin molded body are not completely uniform and vary, and "average diameter (µm)" indicates an average diameter of each of the AlN whiskers 11 (= total diameters of the AlN whiskers/total number of the AlN whiskers). Note that here, as an example of "the AlN whiskers" for determining the average diameter, an image of a part of each sample was taken using an electron microscope, and all AlN whiskers included in the image obtained by this image were used. In another example, an image of the entirety of each sample can be taken using the electron microscope, and all AlN whiskers included in the image obtained by this image can be used as "the AlN whiskers". In yet another example, in an image obtained using any of the above methods, all AlN whiskers included in a unit volume can be used as "the AlN whiskers".

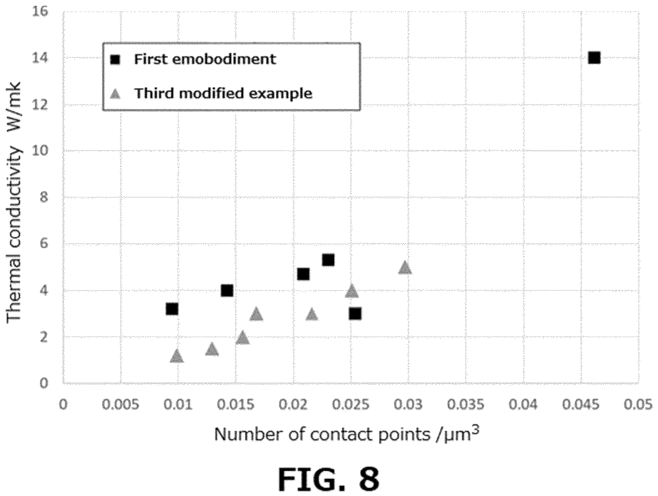

FIG. 8 is a graph showing a relationship between the number of contact points and the thermal conductivity for each of the resin molded body 1 according to the first embodiment and the resin molded body 4 according to the third modified example based on the measurement results shown in FIG. 7.

As is clear from FIGs. 8 and 7, in the resin molded body 4 of the third modified example, the thermal conductivity is 1.5 (W/mk) when the number of contact points is 0.012 (/µm³), whereas the thermal conductivity increases (along a quadratic curve) to 2 (W/mk) when the number of contact points is 0.015 (/µm³). In addition, from a producing standpoint (from the standpoint of ensuring processability), it is preferable that the upper limit of the number of contact points is 1.0. Specifically, if the number of contact points exceeds 1, the viscosity of the resin material increases, which may make it difficult to mold the resin molded body into a sheet. Therefore, it is preferable that the upper limit of the number of contact points is 1.0.

Therefore, it is more preferable that the number of contact points is in the range of 0.015 (/µm³) or more and 1.0 (/µm³) or less. Further, as another upper limit, when the number of contact points is 0.029 (/µm³), the thermal conductivity is 5 (W/mk), which is significantly greater than the thermal conductivity (1.5 (W/mk)) when the number of contact points is 0.012 (/µm³). Therefore, it is more preferable that the number of contact points is in the range of 0.015 (/µm³) or more and 0.029 (/µm³) or less.

In addition, the thermal conductivity is 2 (W/mk) when the number of contact points is 0.015 (/µm³), whereas the thermal conductivity increases (along a quadratic curve) to 3 (W/mk) when the number of contact points is 0.016 (/µm³) . Therefore, it is more preferable that the number of contact points is in the range of 0.016 (/µm³) to 1.0 (/µm³), and even more preferable that the number of contact points is in the range of 0.016 (/µm³) to 0.029 (/µm³) .

Focusing on the resin molded body 1 according to the first embodiment, the thermal conductivity is 4 (W/mk) when the number of contact points is 0.014 (/µm³), whereas the thermal conductivity increases to 4.7 (W/mk) when the number of contact points is 0.020 (/µm³). Further, from a producing standpoint (from the standpoint of ensuring processability), it is preferable that the upper limit of the number of contact points is 1.0. Specifically, if the number of contact points exceeds 1.0, it may become difficult to mold the plurality of the AlN whiskers into a nonwoven fabric, and/or it may become difficult for the resin material to penetrate into the gaps formed between the plurality of the AlN whiskers. Therefore, it is preferable that the upper limit of the number of contact points is 1.0.

Therefore, it is more preferable that the number of contact points is in the range of 0.020 (/µm³) or more and 1.0 (/µm³) or less. Further, as another upper limit, the thermal conductivity is 14 (W/mk) when the number of contact points is 0.046 (/µm³), which is significantly greater than the thermal conductivity (4 (W/mk)) when the number of contact points is 0.014 (/µm³). Therefore, it is more preferable that the number of contact points is in the range of 0.020 (/µm³) or more and 0.046 (/µm³) or less.

In addition, the thermal conductivity is 4.7 (W/mk) when the number of contact points is 0.020 (/µm³), whereas the thermal conductivity increases (along a quadratic curve) to 5.3 (W/mk) when the number of contact points is 0.023 (/µm³) . Therefore, it is more preferable that the number of contact points is in the range of 0.023 (/µm³) or more and 1.0 (/µm³) or less, and even more preferable that the number of contact points is in the range of 0.023 (/µm³) or more and 0.046 (/µm³) or less.

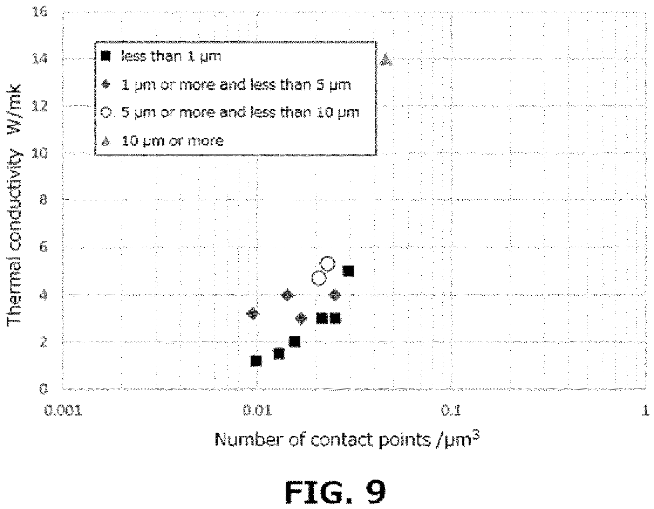

FIG. 9 is a graph showing the relationship between the number of contact points and thermal conductivity for each of average diameters (ranges) of four types based on the measurement results shown in FIG. 7. Here, the average diameters (ranges) of the four types include ranges of less than 1 µm, 1 um or more and less than 5 um, 5 µm or more and less than 10 µm, and 10 µm or more. Note that these average diameters of the four types do not distinguish between the resin molded body 1 according to the first embodiment and the resin molded body 4 according to the third modified example. In addition, in the graph shown in FIG. 9, a horizontal axis is expressed in logarithmic notation.

As is clear from FIGs. 9 and 7, when the number of contact points is the same or approximately the same, the thermal conductivity when the average diameter is in the range of 1 um or more and 10 µm or less is significantly higher than the thermal conductivity when the average diameter is less than 1 um. Therefore, it is preferable that the average diameter is in the range of 1 um or more and 10 um or less. Furthermore, it is even more preferable that the average diameter is in the range of 5 µm or more and 10 µm or less.

This application is based on Japanese Patent Application No. 2022-016179, entitled "RESIN MOLDED BODY AND METHOD FOR PRODUCING THE SAME" filed on February 4, 2022, and benefits from the priority of this Japanese patent application. The entire contents of this Japanese patent application are incorporated herein by reference.

### REFERENCE SIGNS LIST

1-4: Resin molded body
10: Sheet-like formed body
11: AlN whisker
20: Resin material
30: Spherical AlN filler
40: Cover formed body
50: Spherical resin material (Spherical resin particle)

## Claims

1. A resin molded body comprising: at least,
AlN whiskers each having a fibrous AlN single-crystal body having a surface and an oxygen-containing layer covering the surface of the AlN single-crystal body; and
a resin material,
wherein a weight ratio of the AlN whiskers is in a range of 3.0 wt% or more and 65.0 wt% or less.

2. The resin molded body as claimed in claim 1, wherein the weight ratio of the AlN whiskers is in the range of 3.0 wt% or more and 20.0 wt% or less, or 50.0 wt% or more and 65.0 wt% or less.

3. The resin molded body as claimed in claim 1, wherein the AlN whiskers are mainly composed of a diameter of 1.0 um or more.

4. The resin molded body as claimed in claim 1, wherein the AlN whiskers come into contact with each other to form a sheet-like formed body having a network structure, and the resin material is impregnated in the sheet-like formed body.

5. The resin molded body as claimed in claim 1, wherein the resin material is formed of a plurality of spherical resin particles each having a surface, and
wherein the surface of the plurality of the resin particles is covered with the AlN whiskers, thereby forming a cover formed body.

6. The resin molded body as claimed in claim 1, wherein the resin molded body has the number of contact points being the total number of points at which the AlN whiskers contact with each other per unit volume, and the number of contact points is in a range of 0.015/µm³ or more and 1/µm³ or less.

7. The resin molded body as claimed in claim 6, wherein the number of contact points is in the range of 0.016/µm³ or more and 1/µm³ or less.

8. The resin molded body as claimed in claim 6, wherein the number of contact points is in the range of 0.020/µm³ or more and 1/µm³ or less.

9. The resin molded body as claimed in claim 6, wherein the number of contact points is in the range of 0.023/µm³ or more and 1/µm³ or less.

10. The resin molded body as claimed in claim 1, wherein each of the AlN whiskers has a diameter in a range of 1.0 um or more and 10 um or less.

11. The resin molded body as claimed in claim 1, wherein each of the AlN whiskers has a diameter in a range of 5.0 um or more and 10 um or less.

12. A method for producing a resin molded body including at least, AlN whiskers each having a fibrous AlN single-crystal body having a surface and an oxygen-containing layer covering the surface of the AlN single-crystal body, and a resin material, the method comprising:
forming a sheet-like formed body having a network structure in which the AlN whiskers come into contact with each other; and
impregnating the sheet-like formed body with the resin material.

13. A method for producing a resin molded body including at least, AlN whiskers each having a fibrous AlN single-crystal body having a surface and an oxygen-containing layer covering the surface of the AlN single-crystal body, and a plurality of spherical resin particles each having a surface, the method comprising:
forming a cover formed body in which the surface of the plurality of the resin particles is covered with the AlN whiskers; and
pressing the cover formed body.
